# EUROPÄISCHE PATENTANMELDUNG

(11) **EP 3 936 954 A1**
(43) Veröffentlichungstag der Anmeldung: **12.01.2022**
(21) Anmeldenummer: 20184941.1
(22) Anmeldetag: 09.07.2020
(51) Int. Cl.: G05B 19/418

(54) **VERFAHREN UND VORRICHTUNG ZUR OBERFLÄCHENANALYSE EINES WERKSTÜCKS**

(71) Anmelder: Siemens Aktiengesellschaft, 80333 München (DE)
(72) Erfinder: Karoly, Robert, 1115 Budapest (HU)
(74) Vertreter: Maier, Daniel Oliver

(57) **Zusammenfassung**

Verfahren zur Oberflächenanalyse eines Werkstücks, welches während einer Bearbeitung mit einem Werkzeug entlang einer Trajektorie bewegt wird und dabei zumindest ein Betriebsparameter in Form von diskreten Werten erfasst wird, wobei die Trajektorie in einen ersten und zumindest einen zweiten Teilabschnitt unterteilt wird, welche einen zueinander parallelen Verlauf aufweisen, und die diskreten Werte des zumindest einen Betriebsparameters entlang des ersten und des zumindest einen zweiten Teilabschnitts vorbestimmten Gruppen eindeutig zugeordnet werden, und dann geprüft wird, ob der erste Teilabschnitt zumindest teilweise an den zumindest einen zweiten Teilabschnitt angrenzt, jedoch nicht dessen Gruppe angehört, und als Oberflächenanomalie des Werkstücks klassifiziert wird.

## Beschreibung

Die Erfindung betrifft ein Verfahren und eine Vorrichtung zur Oberflächenanalyse eines Werkstücks, welches während einer Bearbeitung mit einem Werkzeug entlang einer Trajektorie bewegt wird und dabei zumindest ein Betriebsparameter in Form von diskreten Werten erfasst wird,
Bei einer computergesteuerte Bearbeitungsmaschine mit einem Werkzeug, wie beispielsweise einer CNC-Fräsmaschine ist es oft notwendig, die erzielte Oberflächenqualität eines hergestellten Werkstücks zu analysieren.

Die erfolgt häufig nach einer Herstellung des Werkstücks konventionell optisch, was jedoch beispielsweise durch zeitaufwändige Hantierung aufwändig und teuer sein kann.

Es ist Aufgabe der Erfindung eine genaue Oberflächenanalyse für ein Werkstück durchzuführen und dabei Oberflächenanomalien, welche durch den Herstellungsprozess hervorgerufen werden würden, automatisch, zuverlässig und rasch zu erkennen, ohne das Werkstück einer visuellen Inspektion zu unterziehen.

Die Aufgabe der Erfindung wird durch ein Verfahren eingangs genannter Art gelöst, wobei die Trajektorie in einen ersten und zumindest einen zweiten Teilabschnitt unterteilt wird, welche einen zueinander parallelen Verlauf aufweisen,
und die diskreten Werte des zumindest einen Betriebsparameters entlang des ersten und des zumindest einen zweiten Teilabschnitts vorbestimmten Gruppen eindeutig zugeordnet werden,
und dann geprüft wird, ob der erste Teilabschnitt zumindest teilweise an den zumindest einen zweiten Teilabschnitt angrenzt, jedoch nicht dessen Gruppe angehört, und als Oberflächenanomalie des Werkstücks klassifiziert wird.

Durch die Erfindung wird erreicht, dass eine automatische, rasche und genaue Oberflächenanalyse mit einer Erkennung von Oberflächenanomalien durchgeführt wird.

Alternativ kann die Herstellung des Werkstücks simuliert werden, das heißt ein virtuelles Werkstück erstellt werden, und eine Oberflächenanalyse virtuell vollzogen werden, bevor die physische Herstellung durchgeführt wird. Somit können Problemstellen rechtzeitig erkannt werden und die Herstellung entsprechend korrigiert werden.

Das Verfahren sieht es vor, dass der Bearbeitungsvorgang durch die computergesteuerte Maschine beispielsweise elektronisch protokolliert wird und dann aufgrund des Bewegungsprofils und zugeordneter erfasster Betriebsparameter des Werkzeugs eine Anomalie-Erkennung durchgeführt wird.

Der erste Teilabschnitt und der zumindest eine zweite Teilabschnitt sind Teilmengen von zuvor gebildeten Teilabschnitten der Trajektorie.

In einer Weiterbildung der Erfindung ist es vorgesehen, dass geprüft wird, ob der erste Teilabschnitt zumindest teilweise an zumindest zwei zweite Teilabschnitte derselben Gruppe angrenzt, jedoch nicht deren Gruppe angehört, und als Oberflächenanomalie des Werkstücks klassifiziert wird.

Dadurch kann die Zuverlässigkeit der Anomalie-Erkennung, also beispielsweise die Wahrscheinlichkeit für eine zutreffende Detektion, weiter verbessert werden.

In einer Weiterbildung der Erfindung ist es vorgesehen, dass das Werkzeug eine Bearbeitungsbreite aufweist, und der zumindest eine Betriebsparameter an Stützstellen längs der Trajektorie erfasst wird, welche Stützstellen längs der Trajektorie einen Abstand zueinander aufweisen, der höchstens die halbe Bearbeitungsbreite beträgt.

Dadurch wird eine hohe Genauigkeit des Verfahrens erreicht.

In einer Weiterbildung der Erfindung ist es vorgesehen, dass aus dem zumindest einen Betriebsparameter längs der Trajektorie ein Minimum und ein Maximum ermittelt wird und aus deren Differenz ein Geschwindigkeitsbereich bestimmt wird, in welchem die Wertebereiche der Gruppen liegen, welche vorzugsweise aneinandergrenzen.

Dadurch wird eine einfache Gruppendefinition erreicht.

In einer Weiterbildung der Erfindung ist es vorgesehen, dass aus dem zumindest einen Betriebsparameter ein Durchschnittswert ermittelt wird, aus welchem ein Geschwindigkeitsbereich bestimmt wird, in welchem die Wertebereiche der Gruppen liegen, welche vorzugsweise aneinandergrenzen.

Dadurch wird eine zuverlässige Anomalie-Erkennung erreicht.

In einer Weiterbildung der Erfindung ist es vorgesehen, dass die Zuordnung des zumindest einen Betriebsparameters zu vorbestimmten Gruppen wiederholt durchgeführt wird, und dabei die Gruppen erneut festgelegt werden.

Dadurch kann die Erkennungsrate des Verfahrens, also beispielsweise die Wahrscheinlichkeit für eine korrekte Klassifikation, verbessert werden.

Anomalien sollten unabhängig von einer Gruppierung, das heißt von der Wahl von vorbestimmten Wertebereichen, auftreten.

In einer Weiterbildung der Erfindung ist es vorgesehen, dass für eine initiale Festlegung der Gruppen eine lineare Verteilung zugrunde gelegt wird, und für eine erneute Festlegung der Gruppen eine nichtlineare Verteilung angewandt wird, vorzugsweise in einer unmittelbar nachfolgenden Festlegung.

Dadurch kann die Erkennungsrate des Verfahrens weiter verbessert werden.

In einer Weiterbildung der Erfindung ist es vorgesehen, dass zumindest zwei Betriebsparameter erfasst werden, und für eine erneute Festlegung der Gruppen verschiedene Betriebsparameter der zumindest zwei Betriebsparameter angewandt werden.

Dadurch kann die Erkennungsrate des Verfahrens weiter verbessert werden.

In einer Weiterbildung der Erfindung ist es vorgesehen, dass der Betriebsparameter die Bearbeitungsgeschwindigkeit, die Bearbeitungstemperatur am Werkzeug oder die Stromaufnahme der Maschine ist.

Dadurch wird auf einfache Weise ein Kriterium bereitgestellt, welches zur weiteren Analyse zugrunde gelegt werden kann.

In einer Weiterbildung der Erfindung ist es vorgesehen, dass das Verfahren nach einer physischen Herstellung des Werkstücks durchgeführt wird.

Dadurch ist eine Analyse der Oberflächengüte möglich, ohne das Werkstück physikalisch zu inspizieren.

In einer Weiterbildung der Erfindung ist es vorgesehen, dass das Verfahren nach einer simulierten Herstellung des Werkstücks durch eine Rechenvorrichtung durchgeführt wird. Ein zeitintensives Hantieren des Werkstücks während einer Inspektion kann daher vermieden werden.

Dadurch ist eine Analyse der Oberflächengüte möglich, bevor das Werkstück physikalisch hergestellt wird. Eine Anpassung des Herstellungsprozesses kann noch dementsprechend vorteilhaft und einfach durchgeführt werden.

Die erfindungsgemäße Aufgabe wird auch durch eine Rechenvorrichtung mit einem Speicher zur Oberflächenanalyse eines Werkstücks, welche dazu eingerichtet ist, das Werkstück während dessen Bearbeitung mit einem Werkzeug entlang einer Trajektorie zu bewegen und dabei zumindest einen Betriebsparameter durch zumindest ein Sensormittel zu erfassen, dadurch gekennzeichnet, dass die Rechenvorrichtung dazu eingerichtet ist, das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:
- Fig. 1: ein Ausführungsbeispiel eines bearbeiteten Werkstücks und von Werkzeug-Trajektorien,
- Fig. 2-3: einen vergrößerten Ausschnitt aus Fig. 1,
- Fig. 4-9: Darstellung der Trajektorien aus Fig 2. mit Gruppierungen,
- Fig. 10: einen vergrößerten Ausschnitt aus Fig. 1 mit Stützstellen für Betriebsparameter,
- Fig. 11: ein Ausführungsbeispiel des erfindungsgemäßen Verfahrens in Form eines Ablaufdiagramms.

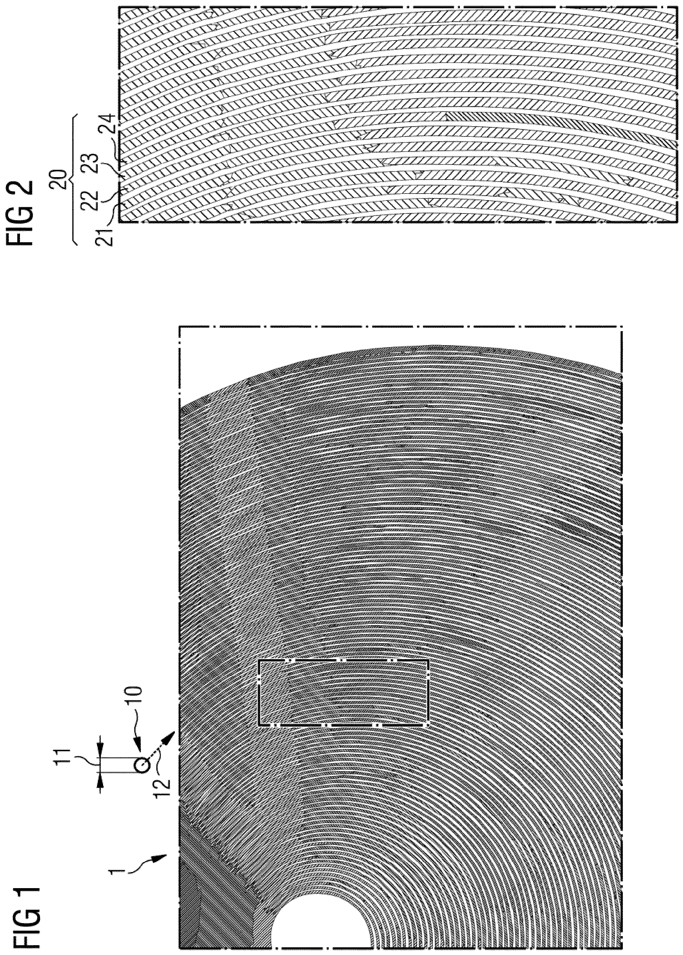

**Fig. 1** zeigt ein Ausführungsbeispiel eines bearbeiteten Werkstücks 1 in Aufsicht, welches durch eine computergesteuerte Maschine wie eine CNC-Fräsmaschine mit einem Werkzeug 10 in Form eines Fräsers bearbeitet wurde.

Das Werkstück 1 weist eine kreisrunde mit einem Fräser mit einer Drei-Achs-Kinematik bearbeiteten Fläche auf.

Die Bearbeitung erfolgt in diesem Beispiel durch ein mäanderförmiges Fräsen mit einem Fräser 10 mit 0.2 mm Durchmesser 11 und Vortriebsgeschwindigkeiten 12 bis zu 4700 mm/min.

Im Zuge der Herstellungsplanung wird für das Werkstück 1 eine Trajektorie 20 für die Bearbeitung durch den Fräser 10 definiert.

Obwohl eine konstante Geschwindigkeit bei der Planung vorgesehen sein kann, kann es zu Abweichungen kommen, beispielsweise durch ein ungünstiges Laufzeitverhalten der Steuerung.

Dabei wird die Bewegung des Werkstück 1 in der Maschine mit ihren Koordinaten als auch die Bearbeitungsgeschwindigkeit vorgegeben.

Dementsprechend ist die Fräsmaschine nun dazu eingerichtet, das Werkstück 1 während dessen Bearbeitung durch den Fräser entlang einer Trajektorie 20 zu bewegen.

Während des Herstellprozesses wird ein oder mehrere Betriebsparameter 12, wie beispielsweise die Bearbeitungsgeschwindigkeit, die Bearbeitungstemperatur am Werkzeug 10 oder die Stromaufnahme der Maschine, durch jeweils entsprechende Sensormittel erfasst.

Eine Rechenvorrichtung mit einem Speicher wird nun eingesetzt, um die Oberflächenanalyse des Werkstücks 1 nach der Bearbeitung durch die computergesteuerte Maschine mit dem Werkzeug durchzuführen.

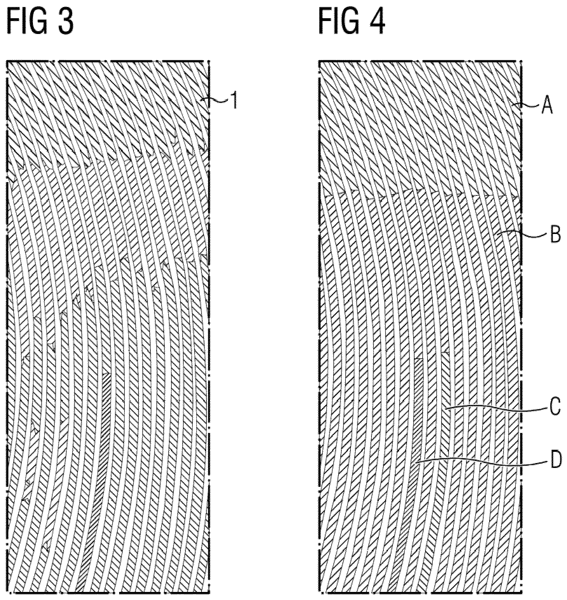

**Fig. 2** und **Fig. 3** stellen einen vergrößerten Ausschnitt aus der Fig. 1 dar.

Die Trajektorie 20 wird in Teilabschnitte 21-24 unterteilt, welche einen zueinander parallelen Verlauf ausweisen.

Der Verlauf kann beispielsweise gerade oder auch gebogen sein, wie in einer Wendekurve des Werkzeugs 10 für einen flächenweisen Materialabtrag am Werkstück 1.

Die Werte des erfassten Betriebsparameters 12, hier die Vortriebsgeschwindigkeit, wird anschließend entlang der Teilabschnitte 21-24 vorbestimmten Gruppen A-D zugeordnet.

**Fig. 4** bis **Fig. 9** zeigen die Trajektorie 20 mit den Teilabschnitten 21-24 aus Fig 2 mit Gruppierungen A-D für vorgegebene Wertebereiche der Betriebsparameters 12.

Für die Gruppierung werden Gruppen definiert, welchen der jeweilige Betriebsparameters 12 aufgrund seines Werts zugeordnet werden kann.

Die Bestimmung der Gruppen kann beispielweise so erfolgen, dass aus dem Betriebsparameter 12 längs der Trajektorie 20 ein Minimum und ein Maximum ermittelt wird.

Aus der Differenz zwischen Maximum und Minimum kann dann ein Geschwindigkeitsbereich bestimmt werden, in welchem die Wertebereiche der Gruppen A-D liegen.

Im einfachsten Fall können die Gruppen A-D aneinandergrenzen, jedoch können für bekannte Werte, die ausdrücklich nicht umfasst werden sollen, wie beispielsweise bei Leerlauf des Fräsers bei Positionsänderungen oder Konfigurationsänderungen im Betrieb der CNC-Maschine, auch Lücken vorgesehen sein.

Alternativ kann aus dem Betriebsparameter 12 auch ein Durchschnittswert ermittelt werden.

Aus dem Durchschnittswert kann beispielsweise anhand einer statistischen Verteilungsfunktion ein Geschwindigkeitsbereich für die Wertebereiche der Gruppen A-D für benachbarte Gruppen festgelegt werden, welche durchaus nicht gleich groß sein müssen.

Es können auch Kombinationen der genannten Gruppendefinitionen angewandt werden.

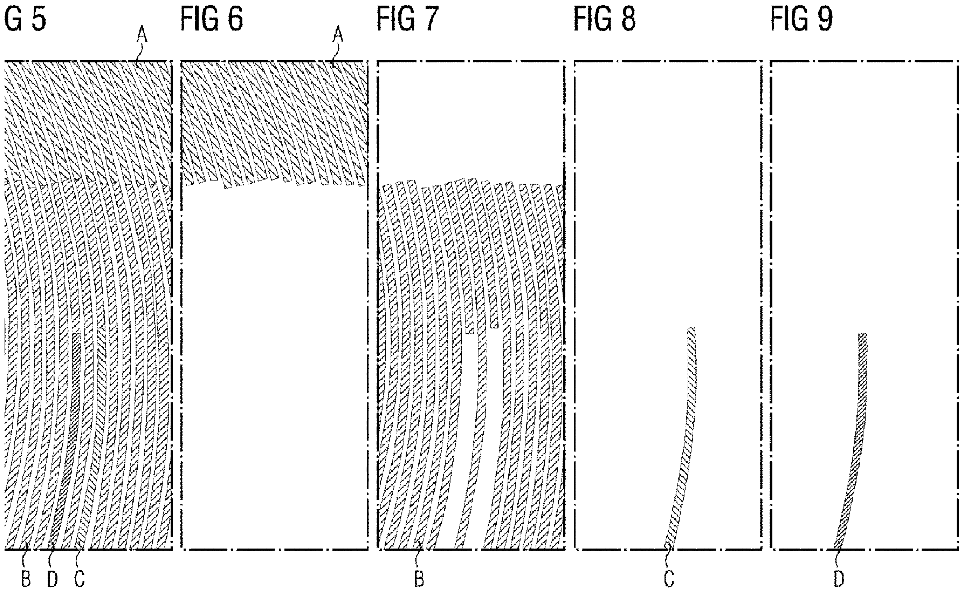

In **Fig. 4** und **Fig. 5** sind Teilabschnitte in den Gruppen A-D erkennbar.

Die Trajektorie 20 ist in einen ersten Teilabschnitt 22 und einen zweiten Teilabschnitt 21 unterteilt, welche einen zueinander parallelen Verlauf aufweisen.

Der erste Teilabschnitt 22 und der zweite Teilabschnitt 21 sind Teilmengen der Teilabschnitte 21-24.

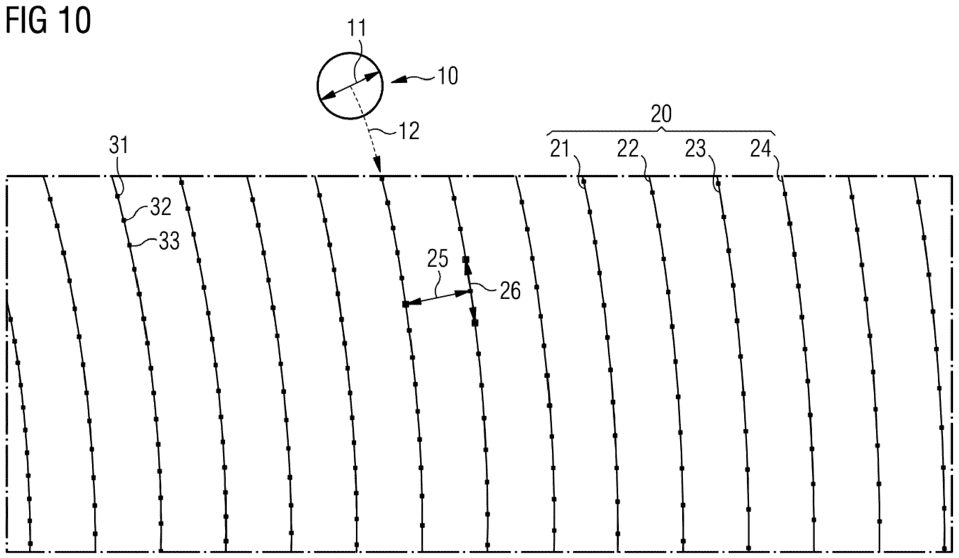

Die diskreten Werte 31-33, siehe Fig. 10, des Betriebsparameters 12 entlang des ersten und des zumindest einen zweiten Teilabschnitts 21-24 werden vorbestimmten Gruppen A-D eindeutig zugeordnet.

Dann wird geprüft, ob der erste Teilabschnitt 22 zumindest teilweise an den zweiten Teilabschnitt 21 angrenzt, jedoch nicht dessen Gruppe B angehört.

Falls zutreffend, wird der zweiten Teilabschnitt 21 als Oberflächenanomalie des Werkstücks 10 erkannt beziehungsweise klassifiziert.

Optional, als weitere Verbesserung des Verfahrens, kann zusätzlich geprüft werden, ob der erste Teilabschnitt 22 zumindest teilweise an zwei zweite Teilabschnitte 21 und 23 derselben Gruppe B angrenzt, jedoch nicht deren Gruppe B angehört

Falls zutreffend, wird der zweiten Teilabschnitt 21 als Oberflächenanomalie des Werkstücks 10 erkannt beziehungsweise klassifiziert.

In **Fig. 6** sind nur jene Teilabschnitte dargestellt, welche parallel zu anderen Bereichen der Trajektorie 20 verlaufen und in derselben Gruppe A für die Vortriebsgeschwindigkeit liegen.

In **Fig. 7** sind nur jene Teilabschnitte dargestellt, welche parallel zu anderen Bereichen der Trajektorie 20 verlaufen und in derselben Gruppe B für die Vortriebsgeschwindigkeit liegen.

In **Fig. 8** ist nur jener Teilabschnitt dargestellt, welcher parallel zu anderen Bereichen der Trajektorie 20 verläuft und in Gruppe C für die Vortriebsgeschwindigkeit liegt.

In **Fig. 9** ist nur jener Teilabschnitt dargestellt, welcher parallel zu anderen Bereichen der Trajektorie 20 verläuft und in Gruppe D für die Vortriebsgeschwindigkeit liegt.

Ein angrenzender, aber nicht derselben Gruppe A-D angehörender Teilabschnitt 21-24 wird als Oberflächenanomalie des Werkstücks 10 ermittelt.

Angrenzende Teilabschnitte 21-24 können beispielsweise dann vorliegen, wenn sich die jeweiligen Teilabschnitte mit der Bearbeitungsbreite 11 entlang der Trajektorie 20 gegenseitig berühren oder zumindest teilweise überlappen, und die Teilabschnitte 21-24 folglich unmittelbar aneinander liegen.

Eine derartige Trajektorie ist beispielsweise dann vorgesehen, wenn aus einem Werkstück-Rohling Material abgefräst wird, um eine ebene Fläche des Werkstücks herzustellen.

Alternativ kann eine derartige Trajektorie auch beispielsweise dann vorgesehen sein, wenn aus einem Werkstück-Rohling Material abgefräst wird, um parallel verlaufende Nuten im Werkstück herzustellen. Dabei können parallel verlaufende Nuten ebenfalls angrenzende Teilabschnitte 21-24 bilden, selbst wenn zwischen den Nuten eine weitere Formgebung des Werkstücks erfolgt.

**Fig. 10** zeigt einen vergrößerten Ausschnitt aus Fig. 1 mit Stützstellen für den Erfassungsort des Betriebsparameters 12.

Die Teilanschnitte der Trajektorie 20 verlaufen in einem Abstand 25 parallel zueinander.

Der Abstand 25 ist in diesem Beispiel so gewählt, dass sich die Fräsbahnen mit der Bearbeitungsbreite 11 überlappen und dadurch ein vollständiger Materialabtrag sichergestellt ist.

Die Wahl der Stützstellen ist meist durch die Abtastrate eines Erfassungssystems für den Betriebsparameter 12 bestimmt.

Es ist klar, dass beispielsweise eine mögliche Vorschubgeschwindigkeit des Fräsers 10 dabei berücksichtigt werden muss.

Die Stützstellen für die Erfassung des Betriebsparameters 12 resultieren in dementsprechende Werte 31-33.

Die Wahl der Stützstellen kann beispielsweise derart erfolgen, indem der Betriebsparameter 12 an Stützstellen längs der Trajektorie 20 erfasst wird, und die Stützstellen längs der Trajektorie 20 einen Stützstellen-Abstand 26 zueinander aufweisen, der höchstens die halbe Bearbeitungsbreite 11 beträgt.

Das Werkzeug 10 bestimmt die Bearbeitungsbreite 11 zumeist durch den Durchmesser des Fräsers.

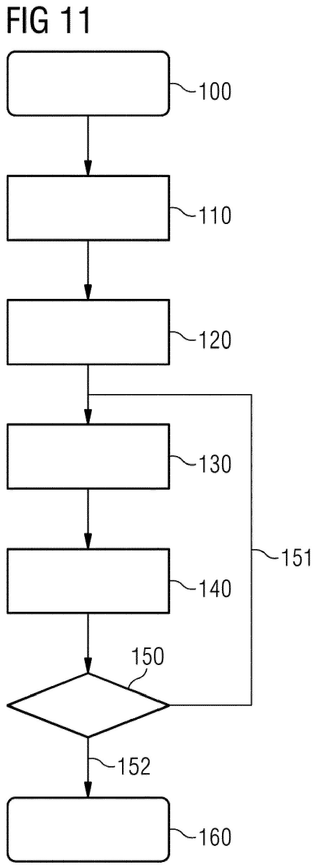

**Fig. 11** zeigt ein Ausführungsbeispiel des erfindungsgemäßen Verfahrens in Form eines Ablaufdiagramms.

Nach einem Start 100 wird das Werkstück 1 entsprechend einer Herstellungsplanung hergestellt, oder eine Herstellung auch nur simuliert wird.

Dabei werden die jeweiligen Positionen des Fräsers 10 und die Fräser-Geschwindigkeiten 12 längs der Trajektorie 20 erfasst.

Die Herstellungsdaten für das Werkstück 1 können beispielsweise in einer Log-Datei abgespeichert werden.

Anschließen erfolgt eine Analyse der Herstellungsdaten.

Dabei wird die Trajektorie 20 im Schritt 120 in Teilabschnitte 21-24 unterteilt, welche einen zueinander parallelen, leicht gekrümmten Verlauf ausweisen.

Anschließend werden in einem Schritt 130 Gruppen definiert und die Werte des erfassten Betriebsparameters 12 entlang der Teilabschnitte 21-24 vorbestimmten Gruppen A-D in einem Schritt 140 zugeordnet.

Anschließend erfolgt eine Prüfung auf eine Anomalie 150.

Die Anomalie-Prüfung 150 prüft, ob der erste Teilabschnitt 22 zumindest teilweise an den zumindest einen zweiten Teilabschnitt 21 angrenzt, jedoch nicht dessen Gruppe B angehört.

Optional kann geprüft werden, ob der erste Teilabschnitt 22 zumindest teilweise an zwei, oder auch mehrere, zweite Teilabschnitte 21 und 23 derselben Gruppe B angrenzt, selbst jedoch nicht deren Gruppe B angehört.

Trifft dies zu, so wird der erste Teilabschnitt 22 als Oberflächenanomalie des Werkstücks 10 erkannt, beziehungsweise klassifiziert.

Falls die Prüfung 150 ergibt, dass keine Anomalie erkannt wurde, kann nun optional durch einem Schritt 151 eine Wiederholung der Analyse erfolgen oder durch Schritt 160 beendet werden.

Die Zuordnung des Betriebsparameters 12 zu vorbestimmten Gruppen A-D kann wiederholt durchgeführt werden, wobei die Gruppen erneut festgelegt werden.

Dabei kann als Kriterium für die Wiederholungen zumindest eine vorab festgelegte Anzahl an erkannten Oberflächenanomalien des Werkstücks 10 ermittelt werden, oder bis eine vorbestimmte Anzahl an erneuten Festlegungen der Gruppen A-D erreicht ist.

Für eine initiale Festlegung der Gruppen A-D kann eine lineare Verteilung zugrunde gelegt werden, und für eine erneute Festlegung der Gruppen A-D kann eine nichtlineare Verteilung angewandt werden, beispielsweise in einer unmittelbar nachfolgenden Festlegung.

Es können auch zwei oder mehrere Betriebsparameter 11 erfasst werden, und für eine erneute Festlegung der Gruppen A-D jeweils verschiedene Betriebsparameter angewandt werden.

### Bezugszeichenliste:

- 1: Werkstück
- 10: Fräs-Werkzeug von CNC-Maschine
- 11: Bearbeitungsbreite, Durchmesser des Fräsers
- 12: Bearbeitungs-, Bewegungsrichtung des Fräsers, Betriebsparameter
- 20: Trajektorie, Fräs-Spur
- 21-24: Teilabschnitt
- 25: Spurabstand
- 26: Stüztstellenabstand
- 31-33: diskreter Wert des Betriebsparameters
- 100: Start Verfahren
- 110: Werkstück herstellen oder Simulation durchführen und dabei Geschwindigkeit als Betriebsparameter erfassen
- 120: Teilabschnitte festlegen
- 130: Gruppen definieren
- 140: Betriebsparameter bzw. Geschwindigkeit den Gruppen zuordnen
- 150: Prüfung auf Anomalie
- 151: Keine Anomalie erkannt
- 152: Anomalie erkannt
- 160: Ende Verfahren

## Patentansprüche

1. Verfahren zur Oberflächenanalyse eines Werkstücks (1), welches während einer Bearbeitung mit einem Werkzeug (10) entlang einer Trajektorie (20) bewegt wird und dabei zumindest ein Betriebsparameter (12) in Form von diskreten Werten (31-33) erfasst wird,
**dadurch gekennzeichnet, dass** die Trajektorie (20) in einen ersten und zumindest einen zweiten Teilabschnitt (21-24) unterteilt wird, welche einen zueinander parallelen Verlauf aufweisen,
und die diskreten Werte (31-33) des zumindest einen Betriebsparameters (12) entlang des ersten und des zumindest einen zweiten Teilabschnitts (21-24) vorbestimmten Gruppen (A-D) eindeutig zugeordnet werden,
und dann geprüft wird, ob der erste Teilabschnitt (22) zumindest teilweise an den zumindest einen zweiten Teilabschnitt (21) angrenzt, jedoch nicht dessen Gruppe (B) angehört, und als Oberflächenanomalie des Werkstücks (10) klassifiziert wird.

2. Verfahren nach dem vorhergehenden Anspruch, wobei geprüft wird, ob der erste Teilabschnitt (22) zumindest teilweise an zumindest zwei zweite Teilabschnitte (21, 23) derselben Gruppe (B) angrenzt, jedoch nicht deren Gruppe (B) angehört, und als Oberflächenanomalie des Werkstücks (10) klassifiziert wird.

3. Verfahren nach einem der vorhergehenden Ansprüche, wobei das Werkzeug (10) eine Bearbeitungsbreite (11) aufweist, und der zumindest eine Betriebsparameter (12) an Stützstellen längs der Trajektorie (20) erfasst wird, welche Stützstellen längs der Trajektorie (20) einen Abstand zueinander aufweisen, der höchstens die halbe Bearbeitungsbreite (11) beträgt.

4. Verfahren nach einem der vorhergehenden Ansprüche, wobei aus dem zumindest einen Betriebsparameter (12) längs der Trajektorie (20) ein Minimum und ein Maximum ermittelt wird und aus deren Differenz ein Geschwindigkeitsbereich bestimmt wird, in welchem die Wertebereiche der Gruppen (A-D) liegen, welche vorzugsweise aneinandergrenzen.

5. Verfahren nach einem der vorhergehenden Ansprüche, wobei aus dem zumindest einen Betriebsparameter (12) ein Durchschnittswert ermittelt wird, aus welchem ein Geschwindigkeitsbereich bestimmt wird, in welchem die Wertebereiche der Gruppen (A-D) liegen, welche vorzugsweise aneinandergrenzen.

6. Verfahren nach einem der vorhergehenden Ansprüche, wobei die Zuordnung des zumindest einen Betriebsparameters (12) zu vorbestimmten Gruppen (A-D) wiederholt durchgeführt wird, und dabei die Gruppen erneut festgelegt werden.

7. Verfahren nach dem vorhergehenden Anspruch, wobei für eine initiale Festlegung der Gruppen (A-D) eine lineare Verteilung zugrunde gelegt wird, und für eine erneute Festlegung der Gruppen (A-D) eine nichtlineare Verteilung angewandt wird, vorzugsweise in einer unmittelbar nachfolgenden Festlegung.

8. Verfahren einem der Ansprüche 5 oder 6, wobei zumindest zwei Betriebsparameter (12) erfasst werden, und für eine erneute Festlegung der Gruppen (A-D) verschiedene Betriebsparameter der zumindest zwei Betriebsparameter (12) angewandt werden.

9. Verfahren nach einem der vorhergehenden Ansprüche, wobei der Betriebsparameter (12) die Bearbeitungsgeschwindigkeit, die Bearbeitungstemperatur am Werkzeug (10) oder die Stromaufnahme der Maschine ist.

10. Verfahren nach einem der vorhergehenden Ansprüche, wobei das Verfahren nach einer physischen Herstellung des Werkstücks (10) durchgeführt wird.

11. Verfahren nach einem der vorhergehenden Ansprüche, wobei das Verfahren nach einer simulierten Herstellung des Werkstücks (10) durch eine Rechenvorrichtung durchgeführt wird.

12. Rechenvorrichtung mit einem Speicher zur Oberflächenanalyse eines Werkstücks (1), welche dazu eingerichtet ist, das Werkstück (1) während dessen Bearbeitung mit einem Werkzeug (10) entlang einer Trajektorie (20) zu bewegen und dabei zumindest einen Betriebsparameter (12) durch zumindest ein Sensormittel zu erfassen, **dadurch gekennzeichnet, dass** die Rechenvorrichtung dazu eingerichtet ist, das Verfahren der vorhergehenden Ansprüche auszuführen.
